# EUROPÄISCHE PATENTSCHRIFT

(11) **EP 2 439 911 B1**
(45) Veröffentlichungstag und Bekanntmachung des Hinweises auf die Patenterteilung: **19.04.2017**
(21) Anmeldenummer: 11008022.3
(22) Anmeldetag: 04.10.2011
(51) Int. Cl.: H04L 29/08, H04W 84/18, H04W 52/02, H04W 40/00, G01D 4/00, H04M 11/00, H04L 12/12, H04W 40/22, H04W 40/12

(54) **Verfahren zur Konfiguration eines Netzwerks von Netzknoten sowie Verfahren und Vorrichtungsanordnung zur Übermittlung von Verbrauchsdaten dezentral angeordneter Datenerfassungsgeräte**
Method for configuring a network of network nodes and method and device for transferring consumption data from decentralised data collection devices
Procédé de configuration d'un réseau de noeuds de réseau ainsi que procédé et agencement de dispositif de transmission de données d'utilisation d'appareils de détection de données agencés de manière décentralisée

(30) Priorität: 08.10.2010 DE 102010047946
(43) Veröffentlichungstag der Anmeldung: 11.04.2012
(60) Teilanmeldung: 12186098.5
(73) Patentinhaber: METRONA WÄRMEMESSER UNION GMBH, 81379 München (DE)
(72) Erfinder: Löhr, Karsten, 85435 Erding (DE); Hauenstein, Stefan, 85126 Münchsmünster (DE); Henkel, Gunter, 82152 Martinsried (DE); Heckmann, Dieter, 81476 München (DE)
(74) Vertreter: Prinz & Partner mbB

(56) Entgegenhaltungen:
- EP-A1- 2 222 122
- EP-A2- 1 765 027
- EP-B1- 1 815 650
- WO-A2-2008/033514
- DE-A1- 10 133 366
- US-A1- 2008 108 318
- US-A1- 2009 316 682
- US-A1- 2010 115 302
- US-A1- 2010 150 043

## Beschreibung

Die Erfindung betrifft ein Verfahren zur Konfiguration eines Netzwerks von Netzknoten zur Übermittlung von Verbrauchsdaten dezentral angeordneter Datenerfassungsgeräte an wenigstens einen Master-Netzknoten. Die Erfindung betrifft ferner ein Verfahren zur Übermittlung von Verbrauchsdaten dezentral angeordneter Datenerfassungsgeräte an wenigstens einen Master-Netzknoten. Die Erfindung betrifft darüber hinaus eine Vorrichtungsanordnung zur Übermittlung von Verbrauchsdaten dezentral angeordneter Datenerfassungsgeräte an wenigstens einen Master-Netzknoten.

Im Rahmen der Funkauslesung von Verbrauchsdaten (Gas, Wasser, Wärme, Strom, etc.) müssen die von Datenerfassungsgeräten (Zähler, Heizkostenverteiler, etc.) erfassten Daten an einen Abrechnungsdienstleister übermittelt werden. Aus der EP 1 180 909 B1 ist ein Verfahren bekannt, bei dem die Verbrauchsdaten von einer Vielzahl dezentral angeordneter Datenerfassungsgeräte, die sich in einer oder mehreren Gebietsgruppen, z. B. auf verschiedenen Etagen einer Abrechnungseinheit (Wohnung, Liegenschaft) befinden können, über ein Netzwerk von Zwischenstationen (Datensammlern) zu einer zentralen Datensammelstelle transferiert werden. Von der zentralen Datensammelstelle können die Verbrauchsdaten dann vom Abrechnungsdienstleister gesammelt abgerufen werden. Jeder Zwischenstation werden bestimmte Datenerfassungsgeräte zugeordnet, insbesondere in Abhängigkeit der in einer Zwischenstation detektierten Empfangsleistung des jeweiligen Datenerfassungsgeräts. Innerhalb des Zwischenstationen-Netzwerks werden die Verbrauchsdaten adressiert und ungerichtet versendet, d. h. jede Zwischenstation, die sich innerhalb der Funkreichweite einer anderen Zwischenstation befindet, empfängt deren gespeicherte Verbrauchsdaten. Dadurch stehen die Verbrauchsdaten im Netzwerk nach einer gewissen Zeit allen Zwischenstationen zur Verfügung. Die Daten können somit von jeder Zwischenstation ausgelesen werden. Die Sendung der Daten innerhalb des Netzwerks erfolgt zu festgelegten Zeiten, die den Zwischenstationen bekannt sein müssen.

Nachteilig bei diesem bekannten Verfahren ist das sehr hohe Sendeaufkommen, das zwar für eine hohe Redundanz, aber auch für einen nicht unerheblichen Energieverbrauch sorgt. Das bekannte Verfahren ist deshalb nicht für batteriebetriebene Netze geeignet. Außerdem ist das Ausleseverfahren aufgrund der festen Zeitvorgaben für die Sendung der Daten im Netzwerk nicht flexibel einsetzbar.

In der EP 1 750 475 A2 ist ein Datenübertragungsnetzwerk mit primären Datensendern beschrieben, die dazu eingerichtet sind, in bestimmten Sendezeitintervallen entsprechend der Zeitvorgabe durch eine jeweilige eigene Zeitbasis Daten einschließlich Kennungsinformationen zu ihrer Identifizierung zu senden. Primäre Datenempfänger im Netzwerk sind jeweils primären Datensendern zum Empfang der gesendeten Daten zugeordnet und jeweils in bestimmten Empfangszeitintervallen, die mit den Sendezeitintervallen der ihnen zugeordneten primären Datensender zusammenfallen sollen, empfangsbereit geschaltet. Die primären Datenempfänger senden von den primären Datensendern empfangene Daten bzw. daraus abgeleitete Daten an wenigstens eine weitere Komponente des Datenübertragungsnetzes weiter, um sie unmittelbar durch diese weitere Netzkomponente oder ggf. im Wege der Übermittlung durch zusätzliche Netzkomponenten einer zentralen Datensammelstation zuzuführen. Das Empfangszeitschema eines jeweiligen primären Datenempfängers und dessen Zuordnung zu Datensendern sind durch Empfangsanforderungsinformationen von einer zur Empfangsanforderung autorisierten Netzkomponente änderbar.

Die EP 1 860 830 A1 beschreibt die Installation eines hierarchischen Netzwerkes mit mehreren Sensorknoten, welche Sensormesswerte direkt oder indirekt über Sensorknoten an einen zentralen Netzknoten kommunizieren. Die Sensorknoten werden nacheinander in Betrieb genommen, wobei ein Sensorknoten bei Inbetriebnahme eine anfängliche hierarchische Ebene aufweist und Synchronisations-Informationen gespeichert hat, um mit den in seinem Empfangsgebiet befindlichen Sensorknoten kommunizieren zu können. Ein Sensorknoten bildet temporär einen zentralen Netzknoten. Bei einer Kommunikation zwischen zwei Sensorknoten oder einem Sensorknoten und einem zentralen Netzknoten wird ein Synchronisationstelegramm ausgesendet, mit welchem die hierarchische Ebene des sendenden Knotens an den empfangenden Knoten mitgeteilt wird. Nach einer Kommunikation ändert einer der Sensorknoten seine hierarchische Ebene in Abhängigkeit der hierarchischen Ebene des anderen Sensorknotens.

Nachteilig bei den aus der EP 1 750 475 A2 und der EP 1 860 830 A1 bekannten Netzwerken ist der nicht unerhebliche Aufwand, Sendezeitintervalle und Empfangszeitintervalle der Netzkomponenten aufeinander abzustimmen.

Ein Verfahren und eine Vorrichtungsanordnung mit den Merkmalen der Oberbegriffe der Ansprüche 1 bzw. 13 sind aus der US 2009/0316682 A1 bekannt. Darin ist allgemein ein Ad-hoc-Netzwerk mit Datenerfassungsgeräten beschrieben, deren Daten von Datensammlern ausgelesen und an einen Master übertragen werden, wobei eine bidirektionale Kommunikation zwischen den einzelnen Netzknoten vorgesehen ist. Die Datensammler weisen neben der eigentlichen Sende-/Empfangseinheit zusätzlich einen sogenannten "wake-up transceiver" auf, um speziell bei Batteriebetrieb Strom zu sparen. Die Sende-/Empfangseinheit der Datensammler befindet sich normalerweise in einem Schlaf- oder Standby-Modus und wird vom wake-up transceiver aufgeweckt, wenn dieser ein entsprechendes Signal empfängt. Es wird zudem eine besondere Variante vorgeschlagen, gemäß der der Datensammler nur einen wake-up transceiver enthält, d. h. es ist außer dem wake-up transceiver keine weitere Sende-/Empfangseinheit vorhanden. Diese Variante ist für Fälle geringer Datenmengen vorgesehen, insbesondere bei Übertragung unverschlüsselter Daten.

Die US 2010/0115302 A1 beschreibt ein Aufweckverfahren für ein Gerät, das eine auf dem ZigBee-Funknetz-Standard basierende Empfangseinrichtung aufweist. Befindet sich die Empfangseinrichtung in einem Schlafmodus, wird geprüft, ob ein Schlaf-Timer abgelaufen ist oder ein externer Interrupt vorliegt. Ist eine von beiden Bedingungen erfüllt, wird die Medium Access Control (MAC) Verarbeitungseinheit des Geräts mit Strom versorgt, und es wird ein Wake-Up-Paket empfangen.

Die EP 2 222 122 A1 zeigt einen klassischen "wake-up receiver", der bei Vorliegen bestimmter Bedingungen ein angeschlossenes Hauptsystem, beispielsweise einen Transceiver, einschaltet. Der wake-up receiver soll weniger anfällig für "falsche" Wecksignale werden, indem nach jeder erfolgreichen Erkennung von Aktivität auf einem Kanal, der dann aber ein fehlgeschlagener Vergleich zwischen dem empfangenen und einem gespeicherten Muster folgt, diese nicht erfolgreiche Musterkorrelation in einem Speicher abgelegt wird. Der Speicher wird ausgewertet, und die Parameter, auf denen die Aktivitätsprüfung basiert, werden gegebenenfalls daraufhin geändert. Da die Musterkorrelation vorab vom wake-up receiver durchgeführt wird, ist sichergestellt, dass das angeschlossene Hauptsystem nicht unnötig aufgeweckt und mit der Prüfung behelligt wird, ob das Aufwecken überhaupt gerechtfertigt war. Das Ändern der Parameter, die für die Überprüfung der Kanalaktivität verwendet werden, kann auch das Versetzen des wake-up receivers in einen Stromsparmodus für eine einstellbare Zeitdauer beinhalten. Das bedeutet, dass als Reaktion auf häufige Störsignale zeitlich begrenzte Empfangsfenster geschaffen werden können.

In der US 2010/0150043 A1 ist der Betrieb eines Wake-Up-MACs beschrieben, gemäß der ein Sendeknoten ein Wake-Up-Funkmodul einschaltet, um einen inaktiven Empfangsknoten aufzuwecken. Hierzu wird ein Wake-Up frame an das Wake-Up-Funkmodul des Empfangsknotens gesendet. Nach dem Empfang des Wake-Up frames sendet der Haupt-Transceiver des Empfangsknotens ein bestimmtes Paket an den Haupt-Transceiver des Sendeknotens, um zu bestätigen, dass er aufgeweckt wurde. Anschließend wir das Wake-Up-Funkmodul des Empfangsknotens ausgeschaltet.

Aufgabe der Erfindung ist es, eine stromsparende, effiziente Möglichkeit zur Funkübertragung von Verbrauchsdaten zu schaffen, die ein hohes Maß an Flexibilität hinsichtlich der Datenübertragungswege und der zeitlichen Nutzung bietet.

Gelöst wird diese Aufgabe durch ein Verfahren zur Konfiguration eines Netzwerks von Netzknoten mit den Merkmalen des Anspruchs 1 und durch ein Verfahren zur Übermittlung von Verbrauchsdaten dezentral angeordneter Datenerfassungsgeräte mit den Merkmalen des Anspruchs 12 sowie durch eine Vorrichtungsanordnung zur Übermittlung von Verbrauchsdaten dezentral angeordneter Datenerfassungsgeräte mit den Merkmalen des Anspruchs 13. Vorteilhafte und zweckmäßige Ausgestaltungen der erfindungsgemäßen Verfahren bzw. der erfindungsgemäßen Vorrichtungsanordnung sind in den zugehörigen Unteransprüchen angegeben.

Das erfindungsgemäße Verfahren zur Konfiguration eines Netzwerks von Netzknoten (wie insbesondere Datensammlern und/oder Datenerfassungsgeräten) zur Übermittlung von Verbrauchsdaten dezentral angeordneter Datenerfassungsgeräte an wenigstens einen Master-Netzknoten umfasst das Ermitteln bidirektionaler Kommunikationsverbindungen zwischen den Netzknoten, in denen die Verbrauchsdaten zwischengespeichert sind. Die Kommunikation zwischen den Netzknoten beim Ermitteln der Kommunikationsverbindungen basiert auf einem Wake-On-Radio-Konzept, gemäß dem die Empfangseinrichtung eines Netzknotens in bestimmten Zeitabständen von einem Stromsparmodus in einen Empfangsmodus wechselt, in dem die Empfangseinrichtung für eine bestimmte Zeit auf einem bestimmten Funkkanal zuhört. Der Master-Netzknoten holt Informationen über Kommunikationsverbindungen zwischen einzelnen Netzknoten ein, welche auf Befehl des Master-Netzknotens von den einzelnen Netzknoten ermittelt werden, vorzugsweise einschließlich deren Empfangsqualität.

Jeder der Netzknoten kann die von ihm direkt empfangbaren Nachbar-Netzknoten und vorzugsweise die Empfangsqualität der zugehörigen Kommunikationsverbindung ermitteln und direkt oder indirekt an den Master-Netzknoten weiterleiten.

Jeder Netzknoten kann eine Empfangsliste erstellen, vorzugsweise in der Reihenfolge der Empfangsqualität, in die Identifikationscodes der empfangenen Nachbar-Netzknoten und/oder die zugehörige Empfangsqualität eingetragen wird.

Der Master-Netzknoten kann die Informationen über die Kommunikationsverbindungen in Form einer Matrix aller Wege zusammenstellen, in der jeder Netzknoten, beginnend mit dem Master-Netzknoten, in Abhängigkeit der Empfangsqualität einsortiert ist.

Mithilfe der Informationen über die Kommunikationsverbindungen können bevorzugte Pfade zwischen den Netzknoten und dem Master-Netzknoten ermittelt werden.

Es kann ein bevorzugter Pfad zwischen einem Ziel-Netzknoten und dem Master-Netzknoten ermittelt werden, indem nach dem ersten gesetzten Eintrag in der Zeile und/oder Spalte des Ziel-Netzknotens gesucht und der zugehörige Netzknoten des Eintrags ermittelt und gespeichert wird. Dieser Vorgang kann sooft wiederholt werden, bis die Spalte und/oder Zeile des Master-Netzknotens erreicht ist, sodass die ermittelten und gespeicherten Netzknoten einen Pfad vom Ziel-Netzknoten zum Master-Netzknoten ergeben.

Es kann eine Matrix inaktiver Wege erstellt werden, die entsprechend der Matrix aller Wege aufgebaut ist und Einträge über fehlerhafte Kommunikationsverbindungen zwischen Netzknoten enthält. Mithilfe der Einträge in der Matrix inaktiver Wege können Informationen über die entsprechenden Kommunikationsverbindungen in der Matrix aller Wege gelöscht werden.

Die Informationen über die Kommunikationsverbindungen können unmittelbar vor einer Übermittlung der in den Netzknoten zwischengespeicherten Verbrauchsdaten an den Master-Netzknoten eingeholt werden.

Beim erfindungsgemäßen Verfahren zur Übermittlung von Verbrauchsdaten dezentral angeordneter Datenerfassungsgeräte an wenigstens einen Master-Netzknoten über ein nach dem oben angegebenen Verfahren konfiguriertes Netzwerk von Netzknoten basiert die Kommunikation zwischen den Netzknoten beim Übermitteln der Verbrauchsdaten ebenfalls auf dem genannten Wake-On-Radio-Konzept, gemäß dem die Empfangseinrichtung eines Netzknotens in bestimmten Zeitabständen von einem Stromsparmodus in einen Empfangsmodus wechselt, in dem die Empfangseinrichtung für eine bestimmte Zeit auf einem bestimmten Funkkanal zuhört.

Die erfindungsgemäße Vorrichtungsanordnung zur Übermittlung von Verbrauchsdaten dezentral angeordneter Datenerfassungsgeräte an einen Master-Netzknoten umfasst mehrere Netzknoten mit Sende- und Empfangseinrichtungen, die so angeordnet sind, dass sich jeder Netzknoten wenigstens in Empfangsreichweite eines anderen Netzknotens befindet und sich wenigstens ein Netzknoten zusätzlich in Empfangsreichweite des Master-Netzknotens befindet. Die Netzknoten verfügen über eine Wake-On-Radio-Funktionalität, gemäß der die Empfangseinrichtung eines Netzknotens in bestimmten Zeitabständen von einem Stromsparmodus in einen Empfangsmodus wechselt, in dem die Empfangseinrichtung für eine bestimmte Zeit auf einem bestimmten Funkkanal zuhört. Der Master-Netzknoten ist dazu eingerichtet, Informationen über Kommunikationsverbindungen zwischen einzelnen Netzknoten, welche auf Befehl des Master-Netzknotens von den einzelnen Netzknoten ermittelt werden, einzuholen.

Das Wake-On-Radio-Konzept bzw. die Wake-On-Radio-Funktionalität erlaubt einen äußerst stromsparenden Betrieb bei der Netzwerkkonfiguration und bei der Übermittlung der Verbrauchsdaten an den Master-Netzknoten. Aufgrund der quasi-permanenten Empfangsbereitschaft der Netzknoten gibt es keine zeitliche Einschränkung bei der Netzwerkkonfiguration bzw. bei der Verbrauchsdatenübermittlung. Außerdem ist ein (Fern-)Zugriff auf das Netzwerk jederzeit möglich, auch im Rahmen einer Fernwartung des Netzwerks.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- - Figur 1: eine Darstellung vernetzter Netzknoten;
- - Figur 2: eine Matrix aller Wege;
- - Figur 3: eine Matrix inaktiver Wege;
- - Figur 4: ein Pfadsuchbeispiel in zwei Schritten;
- - Figur 5: einen ermittelten Pfad; und
- - Figur 6: einen umgekehrten Pfad.

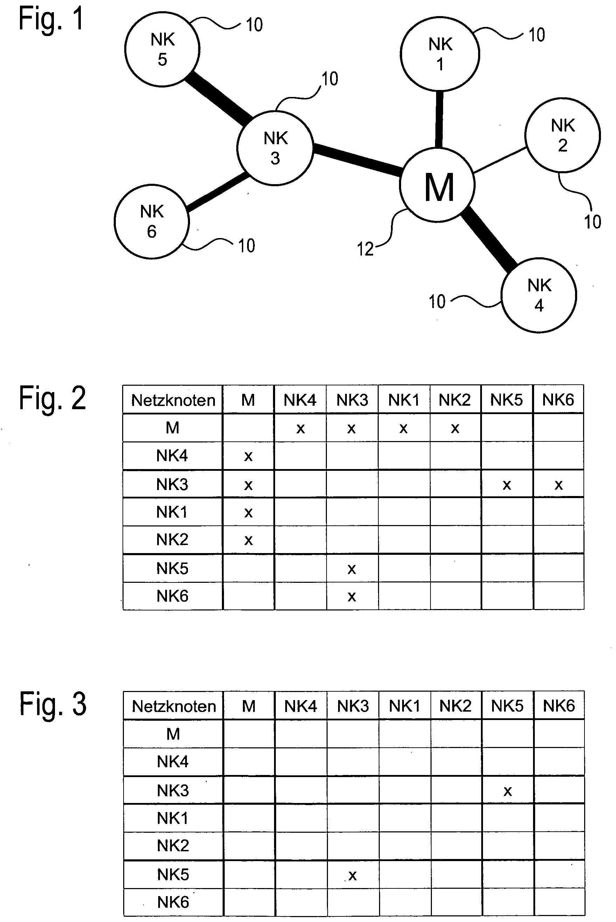

In Figur 1 sind mehrere Netzknoten 10 und ein Master-Netzknoten 12 (nachfolgend kurz: Master) dargestellt, die miteinander vernetzt sind. Gemäß einer bevorzugten Anwendung der Erfindung handelt es sich bei den Netzknoten 10 um Datensammler und beim Master 12 um einen Master-Datensammler, ohne dass die Erfindung hierauf eingeschränkt wäre. Die Netzknoten 10 und auch der Master 12 sind dafür eingerichtet, Verbrauchsdaten zu empfangen, die von dezentral angeordneten Datenerfassungsgeräten (nicht dargestellt) ausgesendet werden. Die Datenerfassungsgeräte können insbesondere Strom-, Gas-, Wasser- Wärmezähler oder an Heizkörpern angebrachte Heizkostenverteiler sein und im Hinblick auf ihre Netzabschluss-Anbindung an das Netzwerk allgemein auch als Endgeräte bezeichnet werden.

Die Übertragung der Verbrauchsdaten von den Datenerfassungsgeräten zu den Netzknoten 10, 12 ist in der Regel unidirektional und wird als Primärfunk bezeichnet. Zur Realisierung von weitergehenden Funktionen können die Datenerfassungsgeräte zusätzlich mit Empfangsmodulen ausgestattet sein. In diesem Fall ist eine bidirektionale Kommunikation mit den Netzknoten 10, 12 möglich.

Sowohl die Datenerfassungsgeräte als auch die Netzknoten 10 sind batteriebetrieben. Der Master 12 ist ebenfalls batteriebetrieben, kann alternativ aber auch an das Stromnetz angeschlossen sein.

In jedem Netzknoten 10, 12 (einschließlich dem Master) ist dessen Produktionsnummer oder ein anderer eindeutiger Identifikationscode hinterlegt. Die Netzknoten 10 und der Master 12 weisen Sende- und Empfangsmodule (kurz: Sender und Empfänger) auf und sind zur bidirektionalen, drahtlosen Kommunikation untereinander eingerichtet.

Der Master 12 verfügt im Wesentlichen über die gleichen Komponenten und hat den gleichen Aufbau wie die anderen Netzknoten 10 im Netzwerk. Somit kann bei einer vorhandenen Anordnung von Netzknoten nach freiem Ermessen bestimmt werden, welcher Netzknoten 10 als Master 12 fungieren soll. Bei Bedarf kann nachträglich auch ein anderer Netzknoten 10 zum Master 12 umkonfiguriert werden. Grundsätzlich können auch mehrere Master 12 in einem Netzwerk vorgesehen sein.

Die Netzknoten 10 und der Master 12 können in wenigstens zwei Betriebsarten betrieben werden: im bereits erwähnten Primärfunkbetrieb und in einem Sekundärfunkbetrieb. Im Primärfunkbetrieb empfangen die Netzknoten 10 und der Master 12 Verbrauchsdaten der Datenerfassungsgeräte. Im Sekundärfunkbetrieb werden die Verbrauchsdaten innerhalb des Netzwerks auf bidirektionalen Kommunikationswegen zum Master 12 transferiert.

Aufgrund der Trennung in Primärfunkbetrieb und Sekundärfunkbetrieb können sich Frequenzband, Modulationsart und/oder Datenrate in den beiden Betriebsarten unterscheiden, was eine gezielte Abstimmung auf die speziellen Anforderungen der jeweiligen Betriebsart ermöglicht. Insbesondere im Sekundärfunkbetrieb ist eine hohe Übertragungsrate vorteilhaft, um die Sendedauer und damit den Stromverbrauch beim Senden gering zu halten.

Im Sekundärfunkbetrieb befinden sich die Netzknoten 10 die meiste Zeit in einem Wake-On-Radio-Modus, der nachfolgend allgemein erläutert wird. Im Wake-On-Radio-Modus wechselt der Empfänger eines Netzknotens 10 in regelmäßigen, vorbestimmbaren Zeitabständen von einem Stromsparmodus in einen Empfangsmodus (Wake-Up-Intervall) und hört für eine vorbestimmbare Zeit auf einem vorbestimmbaren Funkkanal zu.

Zu Beginn eines Wake-Up-Intervalls führt der Empfänger eine sogenannte RSSI-Messung durch, um grundsätzlich zu entscheiden ob ein Signal vorhanden ist, das über einer vorbestimmbaren Signalstärkeschwelle liegt (RSSI steht für Received Signal Strength Indication und stellt einen Indikator für die Empfangsfeldstärke kabelloser Kommunikationsanwendungen dar. Der RSSI-Wert ist ein Ein-Byte-Wert, rangiert also zwischen 0 und 255, je höher umso besser die Signalstärke). Ist ein ausreichend starkes Signal vorhanden, so wird für eine konfigurier-bare Zeit auf ein Wake-Up-Paket gewartet. Ein Wake-Up-Paket geht einer Botschaft voraus und weist eine definierte Präambel und ein definiertes Synchronisationswort auf, die vom Empfänger erkannt und verarbeitet werden können.

Das Wake-Up-Paket wird vom Sender für eine definierbare Zeit wiederholt ausgesandt (Wake-Up-Sequenz), um den angesprochenen Netzknoten 10 bzw. dessen Empfänger zu wecken. Wird ein Wake-Up-Paket empfangen, so wird es bearbeitet, falls es für diesen Netzknoten 10 bestimmt ist. Ansonsten schaltet der Empfänger wieder zurück in den Wake-On-Radio-Modus, ebenso wie in dem Fall, wenn kein oder ein zu schwaches Signal empfangen wird.

Anhand des Wake-Up-Paketes erkennt der Empfänger auch, wie lange noch weitere Wake-Up-Pakete gesendet werden. In dieser Zeit kann der Empfänger in den Stromsparmodus wechseln. Nach Beendigung der Wake-Up-Sequenz wechselt der Empfänger dann für eine definierbare Zeit in den Empfangsmodus, um die eigentliche Botschaft zu empfangen.

Vor der Nutzung wird das Netzwerk konfiguriert. Grundsätzlich kann die Netzwerkkonfiguration einmalig, in regelmäßigen Abständen oder vor jedem Sekundärfunkbetrieb erfolgen, oder sie kann zu einem beliebigen Zeitpunkt angestoßen werden, auch über einen Fernzugriff.

Während der Netzwerkkonfiguration werden bidirektionale Kommunikationsverbindungen zwischen den Netzknoten 10, 12 ermittelt, die später im Sekundärfunkbetrieb zur Übertragung der Verbrauchsdaten von den Netzknoten 10 zum Master 12 genutzt werden. Voraussetzung für die Konfiguration des Netzwerks ist, dass die Netzknoten 10, 12 so angeordnet sind, dass sich jeder Netzknoten 10, 12 wenigstens in Empfangsreichweite eines anderen Netzknotens 10, 12 befindet und sich wenigstens ein Netzknoten 10 zusätzlich in Empfangsreichweite des Masters 12 befindet.

Zu Beginn der Netzwerkkonfiguration sendet der Master 12 einen Befehl der Art "Ermittle deine Nachbarn und teile dem Master deine Empfangsliste mit" in das Netzwerk aus. Der Befehl pflanzt sich bis zum letzten erreichbaren Netzknoten 10 fort. Jeder Netzknoten 10, 12 (auch der Master) ermittelt daraufhin die von ihm direkt empfangbaren Nachbarn und die Empfangsqualität der zugehörigen Verbindung. Zu diesem Zweck senden die Netzknoten 10, 12 periodisch Verbindungspakete aus. Während desselben Zeitraums ermöglicht ein Empfangsbetrieb der Netzknoten 10, 12, auf die Verbindungspakete von Nachbar-Netzknoten 10, 12 zu reagieren.

Im Beispiel der Figur 1, in der unterschiedliche Strichstärken unterschiedlichen Empfangsqualitäten entsprechen, kann etwa der Master 12 die Netzknoten NK1 bis NK4 empfangen, wobei die Verbindung zum Netzknoten NK4 am besten und die zum Netzknoten NK2 am schlechtesten ist. Jeder Netzknoten 10 erstellt eine Empfangsliste in der Reihenfolge der Empfangsqualität, in die die Identifikationscodes der empfangbaren Nachbar-Netzknoten 10, 12 und optional die zugehörige Empfangsqualität als RSSI-Wert eingetragen wird.

Der Master 12 erstellt im Laufe der Konfiguration eine "Matrix aller Wege" (siehe Figur 2), in welche Informationen über Kommunikationsverbindungen zwischen den einzelnen Netzknoten 10, 12 eingetragen werden (Verbindung ja/nein, optional die Empfangsqualität als RSSI-Wert). Jeder Netzknoten 10, 12 erhält eine Zeile und eine Spalte, sodass die Matrix aller Wege am Ende der Konfiguration n Zeilen und n Spalten hat, wobei n die Gesamtanzahl der Netzknoten 10, 12 im Netzwerk (einschließlich Master) angibt.

Parallel zur Matrix aller Wege wird eine "Matrix inaktiver Wege" gehalten (siehe Figur 3), die die gleiche Dimension (n x n) wie die der Matrix aller Wege hat und deren Bedeutung später noch erläutert wird.

Bei der Erstellung der Matrix aller Wege vergibt der Master 12, der selbst immer die Zeile 0 und die Spalte 0 innehat, zuerst für jeden seiner direkt empfangbaren Nachbar-Netzknoten 10 eine Zeile und eine Spalte - sortiert nach der Empfangsqualität - und trägt die Verbindungen bzw. deren Qualität in die Matrix aller Wege ein. Gemäß dem Beispiel der Figur 1 besteht die beste Verbindung des Masters 12 zum Netzknoten NK4, sodass der Netzknoten NK4 dem Master 12 direkt nachfolgend in die Matrix einsortiert wird. Die zweitbeste Verbindung besteht zum Netzknoten NK3, sodass dieser direkt nachfolgend einsortiert wird usw.

Danach beginnt der Master 12, in der Reihenfolge der Empfangsqualität die Nachbar-Netzknoten 10, genauer gesagt deren Empfangslisten auszulesen und trägt die daraus bekannten Verbindungen ebenfalls in die Matrix aller Wege ein. Dies geschieht mit möglichst minimalem Speicherbedarf für Verbindungsqualität und Pfadinformation. Hat der Master 12 alle erreichbaren Netzknoten 10 im Netzwerk ausgelesen, enthält die Matrix aller Wege alle Verbindungen der Netzknoten 10, 12 untereinander, d. h. die komplette Netztopologie ist bekannt.

Wird in der Matrix aller Wege nur die Information gespeichert, ob eine Verbindung zwischen zwei Netzknoten 10, 12 besteht, so ist dafür jeweils nur ein Bit nötig. Allgemein ist der Speicherbedarf der Matrix proportional zur Anzahl der Netzknoten im Netzwerk und der gespeicherten Übertragungsqualitäts- und Pfadinformation.

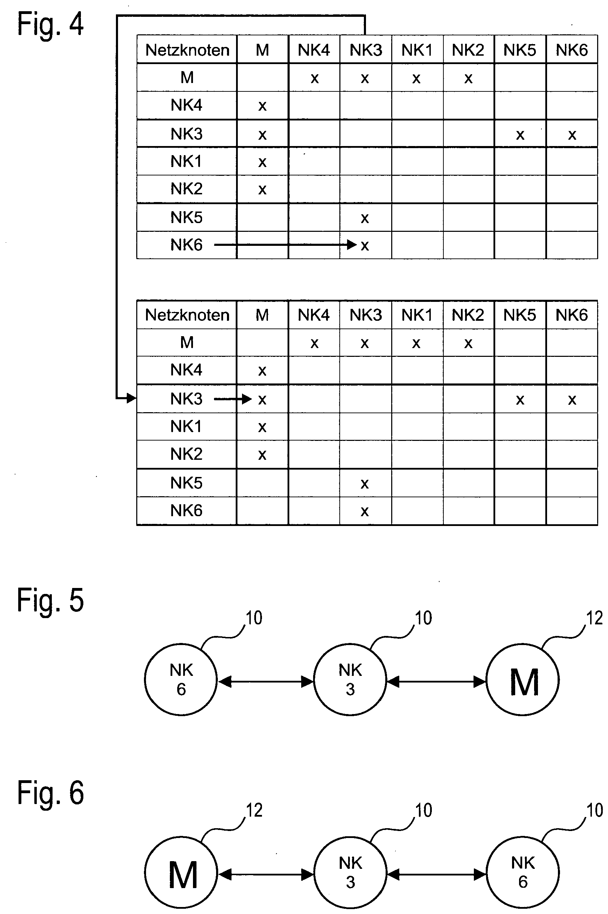

Für jeden Netzknoten 10 im Netzwerk wird nun mithilfe der Matrix aller Wege ein bevorzugter Pfad zum Master 12 ermittelt (Routing). Startpunkt jeder Pfadermittlung ist der Ziel-Netzknoten 10, d. h. der Netzknoten 10, der abgefragt werden soll. In der Matrix aller Wege wird zunächst nach dem ersten gesetzten Eintrag in der Zeile und/oder Spalte des Ziel-Netzknotens 10 gesucht, wie in Figur 4 oben am Beispiel des Ziel-Netzknotens NK6 gezeigt (hier: Zeilensuche). Wird in dieser Zeile und/oder Spalte kein Eintrag gefunden, so besteht zum Ziel-Netzknoten im Netzwerk keine Verbindung. Wird ein Eintrag in der Zeile und/oder Spalte gefunden, so wird der zugehörige Netzknoten 10 als Wegpunkt des Pfads gespeichert. Im Beispiel der Figur 4 ist dies der Netzknoten NK3.

Die Suche wird in der Zeile und/oder Spalte des zuvor ermittelten Netzknotens 10 fortgesetzt, wie in Figur 4 unten gezeigt. Dieser Vorgang wird so oft wiederholt, bis die Spalte bzw. Zeile des Masters 12 erreicht wird, was dem Ziel des gesuchten Pfads entspricht. Alle gespeicherten Netzknoten 10 ergeben zusammen dann den gesuchten Pfad, wie in Figur 5 gezeigt. Da alle späteren Ausleseanfragen (Requests) vom Master 12 ausgehen, wird der Pfad in umgekehrter Form gespeichert, wie in Figur 6 gezeigt, sodass jeder Pfad beim Master 12 beginnt. Während der Pfadsuche wird der ermittelte Pfad plausibilisiert, und das Routing von Schleifen wird vermieden.

Die im Master 12 parallel zur Matrix aller Wege gehaltene Matrix inaktiver Wege (Figur 3) dient zur Kontrolle der Kommunikationsverbindungen zwischen den Netzknoten 10, 12. Im Falle einer festgestellten fehlerhaften Verbindung zwischen zwei Netzknoten 10, 12 im Netzwerk wird ein Eintrag in die Matrix inaktiver Wege vorgenommen, der eine gestörte Verbindung kennzeichnet. Im Beispiel der Figur 3 wurde ein Fehler in der Kommunikationsverbindung zwischen den Netzknoten NK3 und NK5 festgestellt.

Während der Pfadermittlung werden die Einträge der Matrix inaktiver Wege mit denen der Matrix aller Wege verglichen und bei Übereinstimmung in der Matrix aller Wege ausgeblendet. Die so in der Matrix aller Wege gelöschten Verbindungen stehen dann für die Pfadermittlung nicht mehr zur Verfügung, und es wird gegebenenfalls nach Alternativpfaden gesucht.

Am Ende der Konfiguration sind im Master 12 bevorzugte Pfade zu allen Netzknoten 10 des Netzwerks hinterlegt. Optional verteilt der Master 12 die Routing-Informationen an alle Netzknoten 10 des Netzwerks, damit diese den Netzwerkaufbau kennen.

Die gesamte Konfiguration des Netzwerks erfordert keine Synchronisation. Wie bereits erwähnt kann die Konfiguration (oder Teile davon) dynamisch wiederholt werden, um Veränderungen im Netzwerk wie Störungen von Verbindungen, Wegfall bzw. Hinzukommen von Netzknoten 10, 12 etc. Rechnung zu tragen und die Aktualität der Pfade sicherzustellen.

Nachfolgend wird der Ablauf einer Übermittlung der Verbrauchsdaten von den Datenerfassungsgeräten über das Netzwerk zum Master 12 beschrieben. Im Primärfunkbetrieb werden die Verbrauchsdaten von den Datenerfassungsgeräten zeitgesteuert als Funktelegramme ausgesendet (z. B. jeden x. Tag eines Monats) und von den Netzknoten 10, 12 (einschließlich dem Master) empfangen. Eine feste Zuordnung der Datenerfassungsgeräte zu bestimmten Netzknoten 10, 12 ist dabei nicht vorgesehen, grundsätzlich aber möglich.

Zur Vermeidung von Auslöschungen durch Überlappung mit Funktelegrammen anderer Datenerfassungsgeräte können die Verbrauchsdaten mehrmals nacheinander (z. B. mehrfach über den Tag x verteilt) ausgesendet werden. Die Netzknoten 10, 12 befinden sich über einen mit dem bzw. den festgelegten Aussendezeitpunkt(en) korrelierenden Zeitraum im Empfangsmodus. In den Netzknoten 10, 12 werden die empfangenen Verbrauchsdaten zusammen mit der Gerätenummer oder einem anderen eindeutigen Identifikationscode des zugehörigen Datenerfassungsgeräts gespeichert.

Abhängig oder unabhängig vom Zeitpunkt der Übertragung der Verbrauchsdaten an die Netzknoten 10, 12 kann der Master 12 eine Übermittlung der Verbrauchsdaten anfordern, womit der Sekundärfunkbetrieb gestartet wird. Alle Netzknoten 10 befinden sich während des Sekundärfunkbetriebs im Wake-On-Radio-Modus.

Die Verbrauchsdaten werden aus den Netzknoten 10 unter Verwendung der bei der Netzwerkkonfiguration festgelegten Pfade ausgelesen, indem - beginnend beim letzten Netzknoten 10 eines Pfads - die zwischengespeicherten Verbrauchsdaten von allen Netzknoten 10, die auf dem Pfad zum Master 12 liegen, an den Master 12 weitergeleitet werden. Dies hat den Vorteil, dass nicht jeder einzelne Netzknoten 10 explizit vom Master 12 ausgelesen werden muss.

Die Ausleseprozedur sieht vor, dass ein Netzknoten 10, der Verbrauchsdaten von einem auf dem Pfad hinter ihm (d. h. in logischer Hinsicht weiter entfernt vom Master 12) liegenden Netzknoten 10 erhält, diese Verbrauchsdaten zwischenspeichert. Der Netzknoten 10 prüft die empfangenen Verbrauchsdaten darauf, ob sie schon vorhanden sind. Falls ja, verwirft er sie. In diese Filterprozedur werden Kriterien wie Empfangsqualität (RSSI-Wert), Aktualität der Daten, etc. einbezogen. Durch die Filterung wird ausgeschlossen, dass Verbrauchsdaten in einem Pfad doppelt übertragen werden.

Anhand der mit jeder Botschaft mitversandten Pfadangabe (Identifikationscodes aller Netzknoten 10, 12 des Pfads) weiß ein Netzknoten 10, dass und wohin er empfangene Verbrauchsdaten weiterleiten muss. Er filtert die empfangenen Daten und leitet die gefilterten Daten sowie die in seinem eigenen Speicher abgelegten Verbrauchsdaten an seinen nächsten Nachbarn im Pfad in Richtung Master 12 weiter. Aufgrund der Pfadangabe können grundsätzlich Botschaften von mehreren Mastern 12 verarbeitet werden, da keine feste Beziehung zwischen den Netzknoten 10 und einem bestimmten Master 12 besteht.

Erhält der Master 12 aus einem Pfad ein fehlerfreies Verbrauchsdatenpaket, so wird für alle Netzknoten 10 dieses Pfades vermerkt, dass der Datentransfer erfolgreich war. Der Master 12 weiß dann, dass die Netzknoten 10 dieses Pfades nicht mehr abgefragt werden müssen.

Die Abfrage wird mit dem am weitesten entfernten, noch nicht abgefragten Netzknoten 10 fortgesetzt. Grundsätzlich wird immer versucht, Pfade maximaler Länge zu verwenden und abzufragen, um möglichst viele Netzknoten 10 mit einer Abfrage zu erfassen. Die Anzahl der Netzknoten 10 im Pfad kann aber auch bewusst begrenzt werden.

Die Übermittlung der Verbrauchsdaten an den Master 12 ist in jedem Fall dank des Routings gerichtet und folgt den vom Master 12 ermittelten Pfaden, die dynamisch angepasst werden können.

Nach dem Einsammeln aller Verbrauchsdaten geht das Netzwerk wieder in seinen Grundzustand über, in dem sich alle Netzknoten 10, 12 im Wake-On-Radio-Modus (quasi-permanente Empfangsbereitschaft) befinden. Im Grundzustand kann deshalb praktisch zu jedem beliebigen Zeitpunkt auf die Netzknoten 10 zugegriffen werden. Ein Zugriff kann entweder vom Master 12 initiiert lokal erfolgen, oder über ein (öffentliches) Weitverkehrsnetz angestoßen werden. Ein Zugriff kann auch im Rahmen einer Fernwartung o. ä. erfolgen.

Grundsätzlich werden alle Netzknoten 10 im Netzwerk über ihre Produktionsnummer selektiert, d. h. eine explizite Vergabe von Netzwerk- oder Netzknotenadressen findet nicht statt.

Anstelle oder zusätzlich zu den RSSI-Werten kann die Bestimmung der Empfangsqualität der Kommunikationsverbindungen anhand von LQI-Werten erfolgen (LQI steht für Link Quality Indicator und stellt einen aus der empfangenen Energie abgeleiteten Parameter dar, der mit jedem empfangenen Datenpaket mitgeteilt wird).

Generell werden gesendete Pakete vom Empfänger bestätigt, sodass im Fehlerfall (CRC-Fehler, unbekannter Typ, Timeout, etc.) Pakete (gegebenenfalls mehrfach) wiederholt gesendet werden können.

Gemäß einer Erweiterung des Erfindungsgedankens können die Datenerfassungsgeräte in das Netzwerk miteinbezogen und wie die Datensammler als Netzknoten betrachtet werden. In diesem Fall verfügen die Datenerfassungsgeräte ebenso wie die Datensammler zusätzlich über ein Empfangsmodul und die beschriebene Wake-On-Radio-Funktionalität, sodass ein gezieltes Abfragen der Datenerfassungsgeräte "on demand" durch einen Netzknoten 10, 12 ermöglicht wird. Auf eine Zeitsteuerung kann dann ganz verzichtet werden.

Gemäß der Erweiterung registrieren die Datensammler (Netzknoten 10, 12) bei der Netzwerkkonfiguration neben den empfangbaren Nachbar-Datensammlern auch die empfangbaren Datenerfassungsgeräte mit deren Identifikationscode (Gerätenummer). Dem Master 12 werden diese Informationen mitgeteilt, sodass der Master 12 in der Lage ist, für die Abfrage der Verbrauchsdaten Pfade bis hin zu den Datenerfassungsgeräten festzulegen. Gegebenenfalls verteilt der Master 12 die Informationen über die Kommunikationsverbindungen zwischen den Datenerfassungsgeräten und den Datensammlern an die anderen Netzknoten 10 oder an das gesamte Netzwerk einschließlich der Datenerfassungsgeräte.

## Patentansprüche

1. Verfahren zur Konfiguration eines Netzwerks von Netzknoten (10, 12) zur Übermittlung von Verbrauchsdaten dezentral angeordneter Datenerfassungsgeräte an wenigstens einen Master-Netzknoten (12), wobei das Verfahren das Ermitteln bidirektionaler Kommunikationsverbindungen zwischen den Netzknoten (10, 12) umfasst, in denen die Verbrauchsdaten zwischengespeichert sind,
**dadurch gekennzeichnet, dass** die Kommunikation zwischen den Netzknoten (10, 12) beim Ermitteln der Kommunikationsverbindungen auf einem Wake-On-Radio-Konzept basiert, gemäß dem die Empfangseinrichtung eines Netzknotens (10) in bestimmten Zeitabständen von einem Stromsparmodus in einen Empfangsmodus wechselt, in dem die Empfangseinrichtung für eine bestimmte Zeit auf einem bestimmten Funkkanal zuhört,
wobei der Master-Netzknoten (12) Informationen über Kommunikationsverbindungen zwischen einzelnen Netzknoten (10, 12), welche auf Befehl des Master-Netzknotens (12) von den einzelnen Netzknoten (10) ermittelt werden, einholt.

2. Verfahren nach Anspruch 1, **dadurch gekennzeichnet, dass** der Master-Netzknoten (12) die Informationen über die Kommunikationsverbindungen einschließlich deren Empfangsqualität einholt.

3. Verfahren nach Anspruch 1 oder 2, **dadurch gekennzeichnet, dass** jeder Netzknoten (10, 12) die von ihm direkt empfangbaren Nachbar-Netzknoten (10, 12) ermittelt und direkt oder indirekt an den Master-Netzknoten (12) weiterleitet.

4. Verfahren nach Anspruch 3, **dadurch gekennzeichnet, dass** jeder Netzknoten (10, 12) die Empfangsqualität der zugehörigen Kommunikationsverbindung ermittelt und direkt oder indirekt an den Master-Netzknoten (12) weiterleitet.

5. Verfahren nach Anspruch 3 oder 4, **dadurch gekennzeichnet, dass** jeder Netzknoten (10) eine Empfangsliste erstellt, in die Identifikationscodes der empfangenen Nachbar-Netzknoten (10, 12) und/oder die zugehörige Empfangsqualität eingetragen werden.

6. Verfahren nach Anspruch 5, **dadurch gekennzeichnet, dass** die Empfangsliste in der Reihenfolge der Empfangsqualität erstellt wird.

7. Verfahren nach einem der vorhergehenden Ansprüche, **dadurch gekennzeichnet, dass** der Master-Netzknoten (12) die Informationen über die Kommunikationsverbindungen in Form einer Matrix aller Wege zusammenstellt, in der jeder Netzknoten (10, 12), beginnend mit dem Master-Netzknoten (12), in Abhängigkeit der Empfangsqualität einsortiert ist.

8. Verfahren nach einem der vorhergehenden Ansprüche, **dadurch gekennzeichnet, dass** mithilfe der Informationen über die Kommunikationsverbindungen bevorzugte Pfade zwischen den Netzknoten (10) und dem Master-Netzknoten (12) ermittelt werden.

9. Verfahren nach Anspruch 7 und 8, **dadurch gekennzeichnet, dass** ein bevorzugter Pfad zwischen einem Ziel-Netzknoten (10) und dem Master-Netzknoten (12) ermittelt wird, indem nach dem ersten gesetzten Eintrag in der Zeile und/oder Spalte des Ziel-Netzknotens (10) gesucht und der zugehörige Netzknoten (10) des Eintrags ermittelt und gespeichert wird, und dass dieser Vorgang sooft wiederholt wird, bis die Spalte und/oder Zeile des Master-Netzknotens (12) erreicht ist, sodass die ermittelten und gespeicherten Netzknoten (10) einen Pfad vom Ziel-Netzknoten (10) zum Master-Netzknoten (12) ergeben.

10. Verfahren nach einem der Ansprüche 7 bis 9, **dadurch gekennzeichnet, dass** eine Matrix inaktiver Wege erstellt wird, die entsprechend der Matrix aller Wege aufgebaut ist und Einträge über fehlerhafte Kommunikationsverbindungen zwischen Netzknoten (10, 12) enthält, und dass mithilfe der Einträge in der Matrix inaktiver Wege Informationen über die entsprechenden Kommunikationsverbindungen in der Matrix aller Wege gelöscht werden.

11. Verfahren nach einem der vorhergehenden Ansprüche, **dadurch gekennzeichnet, dass** die Informationen über die Kommunikationsverbindungen unmittelbar vor einer Übermittlung der in den Netzknoten (10, 12) zwischengespeicherten Verbrauchsdaten an den Master-Netzknoten (12) eingeholt werden.

12. Verfahren zur Übermittlung von Verbrauchsdaten dezentral angeordneter Datenerfassungsgeräte an wenigstens einen Master-Netzknoten (12) über ein Netzwerk von Netzknoten (10), das nach einem Verfahren gemäß einem der vorhergehenden Ansprüche konfiguriert wurde,
**dadurch gekennzeichnet, dass** die Kommunikation zwischen den Netzknoten (10, 12) beim Übermitteln der Verbrauchsdaten auf einem Wake-On-Radio-Konzept basiert, gemäß dem die Empfangseinrichtung eines Netzknotens (10) in bestimmten Zeitabständen von einem Stromsparmodus in einen Empfangsmodus wechselt, in dem die Empfangseinrichtung für eine bestimmte Zeit auf einem bestimmten Funkkanal zuhört.

13. Vorrichtungsanordnung zur Übermittlung von Verbrauchsdaten dezentral angeordneter Datenerfassungsgeräte an einen Master-Netzknoten (12), umfassend mehrere Netzknoten (10, 12) mit Sende- und Empfangseinrichtungen, die so angeordnet sind, dass sich jeder Netzknoten (10, 12) wenigstens in Empfangsreichweite eines anderen Netzknotens (10, 12) befindet und sich wenigstens ein Netzknoten (10) zusätzlich in Empfangsreichweite des Master-Netzknotens (12) befindet,
**dadurch gekennzeichnet, dass** die Netzknoten (10, 12) über eine Wake-On-Radio-Funktionalität verfügen, gemäß der die Empfangseinrichtung eines Netzknotens (10) in bestimmten Zeitabständen von einem Stromsparmodus in einen Empfangsmodus wechselt, in dem die Empfangseinrichtung für eine bestimmte Zeit auf einem bestimmten Funkkanal zuhört,
wobei der Master-Netzknoten (12) dazu eingerichtet ist, Informationen über Kommunikationsverbindungen zwischen einzelnen Netzknoten (10, 12), welche auf Befehl des Master-Netzknotens (12) von den einzelnen Netzknoten (10) ermittelt werden, einzuholen.

## Claims

1. A method of configuring a network of network nodes (10, 12) for transmitting consumption data of decentralized data acquisition devices to at least one master network node (12), the method comprising ascertaining bidirectional communication links between the network nodes (10, 12) in which the consumption data is temporarily stored,
**characterized in that** the communication between the network nodes (10, 12) during ascertainment of the communication links is based on a Wake-On-Radio concept, according to which the receiving means of a network node (10) changes over at specific time intervals from a power saving mode to a receiving mode in which the receiving means listens on a particular radio channel for a specific period,
the master network node (12) collecting information about communication links between individual network nodes (10, 12) which are ascertained by the individual network nodes (10) by command of the master network node (12).

2. The method according to claim 1, **characterized in that** the master network node (12) collects the information about the communication links including the quality of reception thereof.

3. The method according to claim 1 or 2, **characterized in that** each network node (10, 12) ascertains the neighboring network nodes (10, 12) which are directly receivable by it and forwards them to the master network node (12) directly or indirectly.

4. The method according to claim 3, **characterized in that** each network node (10, 12) ascertains the quality of reception of the associated communication link and forwards it to the master network node (12) directly or indirectly.

5. The method according to claim 3 or 4, **characterized in that** each network node (10) establishes a reception list on which identification codes of the neighboring network nodes (10, 12) received and/or the associated quality of reception are entered.

6. The method according to claim 5, **characterized in that** the reception list is established in the order of the quality of reception.

7. The method according to any of the preceding claims, **characterized in that** the master network node (12) compiles the information about the communication links in the form of a matrix of all routes in which each network node (10, 12), starting with the master network node (12), is sorted, depending on the quality of reception.

8. The method according to any of the preceding claims, **characterized in that** preferred paths between the network nodes (10) and the master network node (12) are ascertained with the aid of the information about the communication links.

9. The method according to claims 7 and 8, **characterized in that** a preferred path between a target network node (10) and the master network node (12) is ascertained by searching for the first entry placed in the line and/or column of the target network node (10) and ascertaining and storing the associated network node (10) of the entry, and **in that** this process is repeated until the column and/or line of the master network node (12) is reached, so that the network nodes (10) ascertained and stored result in a path from the target network node (10) to the master network node (12).

10. The method according to any of claims 7 to 9, **characterized in that** a matrix of inactive routes is prepared which is structured in correspondence with the matrix of all routes and contains entries about faulty communication links between network nodes (10, 12), and **in that** information about the communication links concerned is deleted in the matrix of all routes with the aid of the entries in the matrix of inactive routes.

11. The method according to any of the preceding claims, **characterized in that** the information about the communication links is collected immediately prior to a transmission to the master network node (12) of the consumption data temporarily stored in the network nodes (10, 12).

12. A method of transmitting consumption data of decentralized data acquisition devices to at least one master network node (12) via a network of network nodes (10) that has been configured according to a method according to any of the preceding claims,
**characterized in that** the communication between the network nodes (10, 12) during transmission of the consumption data is based on a Wake-On-Radio concept, according to which the receiving means of a network node (10) changes over at specific time intervals from a power saving mode to a receiving mode in which the receiving means listens on a particular radio channel for a specific period.

13. A device arrangement for transmitting consumption data of decentralized data acquisition devices to a master network node (12), comprising a plurality of network nodes (10, 12) having transmitting and receiving means which are arranged such that each network node (10, 12) is at least within the reception range of another network node (10, 12) and at least one network node (10) is additionally within the reception range of the master network node (12),
**characterized in that** the network nodes (10, 12) have a Wake-On-Radio functionality, according to which the receiving means of a network node (10) changes over at specific time intervals from a power saving mode to a receiving mode in which the receiving means listens on a particular radio channel for a specific period,
the master network node (12) being adapted to collect information about communication links between individual network nodes (10, 12) which are ascertained by the individual network nodes (10) by command of the master network node (12).

## Revendications

1. Procédé de configuration d'un réseau de noeuds de réseau (10, 12) pour la transmission de données de consommation de dispositifs d'acquisition de données agencés de manière décentralisée à au moins un noeud de réseau maître (12), le procédé comprenant la détection de liaisons de communications bidirectionnelles entre les noeuds de réseau (10, 12) dans lesquelles les données de consommation sont stockées temporairement,
**caractérisé en ce que** la communication entre les noeuds de réseau (10, 12) lors de la détection des liaisons de communication est basée sur un concept Wake-On-Radio selon lequel le moyen de réception d'un noeud de réseau (10) passe à intervalles de temps déterminés d'un mode d'économie d'énergie à un mode de réception dans lequel le moyen de réception écoute pendant un temps déterminé sur un canal radio spécifique,
le noeud de réseau maître (12) collectant des informations concernant des liaisons de communication entre des noeuds de réseau individuels (10, 12) qui sont déterminées par les noeuds de réseau individuels (10) sur commande du noeud de réseau maître (12).

2. Procédé selon la revendication 1, **caractérisé en ce que** le noeud de réseau maître (12) collecte les informations concernant les liaisons de communication y compris la qualité de réception de celles-ci.

3. Procédé selon la revendication 1 ou 2, **caractérisé en ce que** chaque noeud de réseau (10, 12) détermine les noeuds de réseau (10, 12) voisins qu'il est apte à capter directement et transmet ceci directement ou indirectement au noeud de réseau maître (12).

4. Procédé selon la revendication 3, **caractérisé en ce que** chaque noeud de réseau (10, 12) détermine la qualité de réception de la liaison de communication associée et transmet celle-ci directement ou indirectement au noeud de réseau maître (12).

5. Procédé selon la revendication 3 ou 4, **caractérisé en ce que** chaque noeud de réseau (10) établit une liste de réception dans laquelle des codes d'identification des noeuds de réseau voisins (10, 12) captés et/ou la qualité de réception associée sont enregistrés.

6. Procédé selon la revendication 5, **caractérisé en ce que** la liste de réception est établie dans l'ordre de la qualité de réception.

7. Procédé selon l'une des revendications précédentes, **caractérisé en ce que** le noeud de réseau maître (12) regroupe les informations concernant les liaisons de communication sous forme de matrice de tous les chemins dans laquelle chaque noeud de réseau (10, 12), en commençant par le noeud de réseau maître (12), est classé en fonction de la qualité de réception.

8. Procédé selon l'une des revendications précédentes, **caractérisé en ce que** des chemins préférés entre les noeuds de réseau (10) et le noeud de réseau maître (12) sont déterminés au moyen des informations concernant les liaisons de communication.

9. Procédé selon les revendications 7 et 8, **caractérisé en ce qu'**un chemin préféré entre un noeud de réseau (10) cible et le noeud de réseau maître (12) est déterminé en recherchant le premier enregistrement placé dans la ligne et/ou la colonne du noeud de réseau (10) cible et en déterminant et mémorisant le noeud de réseau (10) associé de l'enregistrement, et **en ce que** cette opération est répétée jusqu'à ce que la colonne et/ou la ligne du noeud de réseau maître (12) est atteinte, de sorte que les noeuds de réseau (10) déterminés et mémorisés forment un chemin du noeud de réseau (10) cible au noeud de réseau maître (12).

10. Procédé selon l'une des revendications 7 à 9, **caractérisé en ce qu'**une matrice de chemins inactifs est établie, laquelle est réalisée conformément à la matrice de tous les chemins et contient des enregistrements concernant des liaisons de communication incorrectes entre des noeuds de réseau (10, 12), et **en ce que** des informations concernant les liaisons de communication correspondantes sont supprimées de la matrice de tous les chemins au moyen des enregistrements dans la matrice de chemins inactifs.

11. Procédé selon l'une des revendications précédentes, **caractérisé en ce que** les informations concernant les liaisons de communication sont collectées immédiatement avant une transmission des données de consommation temporairement stockées dans les noeuds de réseau (10, 12) au noeud de réseau maître (12).

12. Procédé de transmission de données de consommation de dispositifs d'acquisition de données agencés de manière décentralisée à au moins un noeud de réseau maître (12) au moyen d'un réseau de noeuds de réseau (10) configuré selon un procédé selon l'une des revendications précédentes,
**caractérisé en ce que** la communication entre les noeuds de réseau (10, 12) lors de la transmission des données de consommation est basée sur un concept Wake-On-Radio selon lequel le moyen de réception d'un noeud de réseau (10) passe à intervalles de temps déterminés d'un mode d'économie d'énergie à un mode de réception dans lequel le moyen de réception écoute pendant un temps déterminé sur un canal radio spécifique.

13. Agencement de dispositif pour la transmission de données de consommation de dispositifs d'acquisition de données agencés de manière décentralisée à au moins un noeud de réseau maître (12), comprenant plusieurs noeuds de réseau (10, 12) qui présentent des moyens d'émission et de réception, lesquels sont agencés de telle sorte que chaque noeud de réseau (10, 12) se trouve au moins dans la portée de réception d'un autre noeud de réseau (10, 12) et qu'au moins un noeud de réseau (10) se trouve en plus dans la portée de réception du noeud de réseau maître (12),
**caractérisé en ce que** les noeuds de réseau (10, 12) disposent d'une fonctionnalité Wake-On-Radio selon laquelle le moyen de réception d'un noeud de réseau (10) passe à intervalles de temps déterminés d'un mode d'économie d'énergie à un mode de réception dans lequel le moyen de réception écoute pendant un temps déterminé sur un canal radio spécifique,
le noeud de réseau maître (12) étant aménagé de manière à collecter des informations concernant des liaisons de communication entre des noeuds de réseau individuels (10, 12) qui sont déterminées par les noeuds de réseau individuels (10) sur commande du noeud de réseau maître (12).
